# EUROPEAN PATENT SPECIFICATION

(11) **EP 1 623 748 B1**
(45) Date of publication and mention of the grant of the patent: **15.04.2009**
(21) Application number: 05105811.3
(22) Date of filing: 29.06.2005
(51) Int. Cl.: B01D 29/46

(54) **A filtering element and a filter comprising a plurality of axially stacked filtering elements.**
Filterelement und Filter mit einer Vielzahl von axial gestapelten Filterelementen
Élément filtrant et filtre comprenant une multitude d'éléments filtrants superposés axialement.

(30) Priority: 06.08.2004 IT TO20040557
(43) Date of publication of application: 08.02.2006
(73) Proprietor: COMAT S.R.L., 20015 Parabiago (MI) (IT)
(72) Inventor: BUSCEMI, LUCIANO, 10156, TORINO (IT); BUSCEMI, NUNZIO, 10156, TORINO (IT)
(74) Representative: Robba, Pierpaolo

(56) References cited:
- GB-A- 2 239 612
- US-A- 2 327 648
- US-A- 5 393 423
- US-A- 5 580 454
- US-A1- 2001 023 845

## Description

The present invention refers to a filtering element and to a filter comprising a plurality of filtering elements axially stacked and pressed on one another.

More particularly, the present invention refers to a filter and to a filtering element fitted to filter a water base dielectric fluid used in machinery such as wire electroerosion machines, milling cutters, grinding machines, turning machines and so on.

It is known that, in this kind of machinery, an accurate filtering of the dielectric fluid used during the manufacturing cycle is one of the key factors for the proper operation of the machinery itself.

In the particular case of a wire electroerosion machine, the poor quality of a filter that purifies the dielectric fluid used by the machine itself can cause a number of inconveniences such as, among others, the inadequate quality of the manufactured surface and the insufficient accuracy in the manufactured articles sizes, the clogging of the washing nozzles, the increase in the resin consumption, the dirt deposit in the cooling system and piping and the increase of the corrosion residues.

Filters consisting of axially stacked elements are known in the art. For instance, the European patent application no. EP 1291058 discloses a filter comprising a plurality of discoidal filtering elements axially stacked and pressed so as to form a compact assembly.

However, said discoidal filtering elements do not have openings, that is they are solid, and so they increase the weight and the total size of the filter in which they are arranged in a stack.

A first object of the present invention is, therefore, to provide a filter comprising a plurality of filtering elements having a shape such as to increase the filtration area of the filter without having to increase the size of the total surface of the filtering elements or the length of the stack of filtering elements to achieve the same filtering surface and the same filtration degree.

It is also known, for instance from the U.S. patent application no. US 2,850,169, to build filters comprising a series of stacked discoidal filtering elements made of paper.

It has been, however, experimentally proved that for applications in which filtering of a water base dielectric fluid is needed, the unprocessed paper does not give satisfactory results in the filtration process.

A further object of the present invention is, therefore, to obtain a filtering element, suitable for filtration of a water base dielectric fluid, made of a treated paper base material allowing to more effectively keep the impurities to be filtered present in the dielectric fluid.

These and other objects are achieved with a filtering element and a filter, comprising a plurality of pressed and axially stacked filtering elements, made according to the present invention.

Advantageously, thanks to the filter according to the present invention, an optimal operation of the machinery using the dielectric fluid filtered by the filter according to the present invention is achieved, with a resulting high manufacturing quality of the pieces.

A further advantage is that the filter according to the present invention can be defined as ecological because it does not need, for its operation, any additional substance, such as for instance fossil meal, quartzite and so on, thus collecting a material to be disposed of that turns out to be made simply of the material that has been removed during the machine manufacturing cycle.

Differently from the conventional filters (cartridges), the filter according to the present invention is advantageously self-cleaning since it can be repeatedly and automatically cleaned without stopping the machine manufacturing cycle.

Furthermore the filter according to the present invention advantageously eliminates all the costs for replacement, maintenance and disposal of the known art filters (cartridges) thus allowing a considerable economic saving with a productivity increase and further providing the possibility of achieving the cleanliness degree of the dielectric fluid required by the manufacturer of the machinery in which the fluid is used.

The invention will be now described in detail with particular reference to the attached drawings, provided by way of non limiting example, in which:
- Figures 1, 2a and 2b are respectively a frontal view, a top view and a bottom view of a filter for water base dielectric fluid according to the invention;
- Figure 3 is a plan view of a filtering element according to the invention used in the filter of Fig. 1;
- Figure 4 shows a basic scheme of the decontamination system of a water base dielectric fluid comprising at least one filter according to the invention, said system being used during the operation of a wire electroerosion machine.

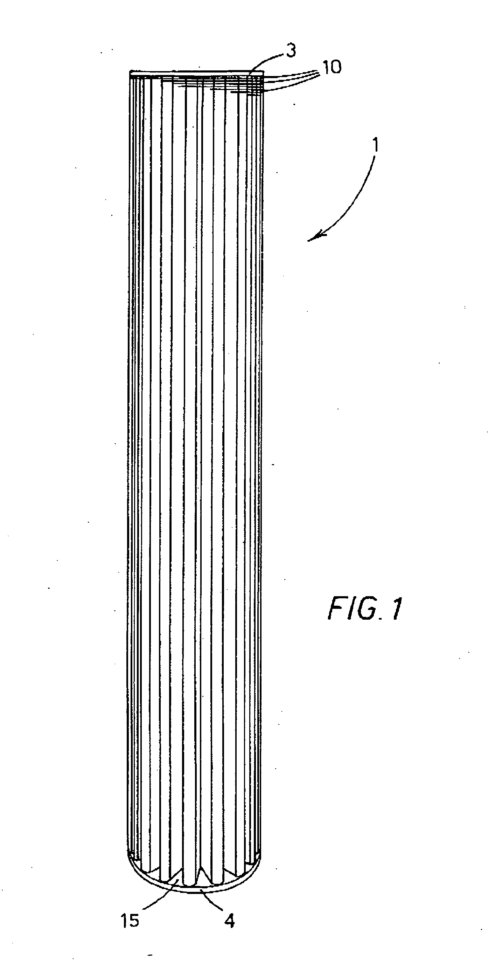

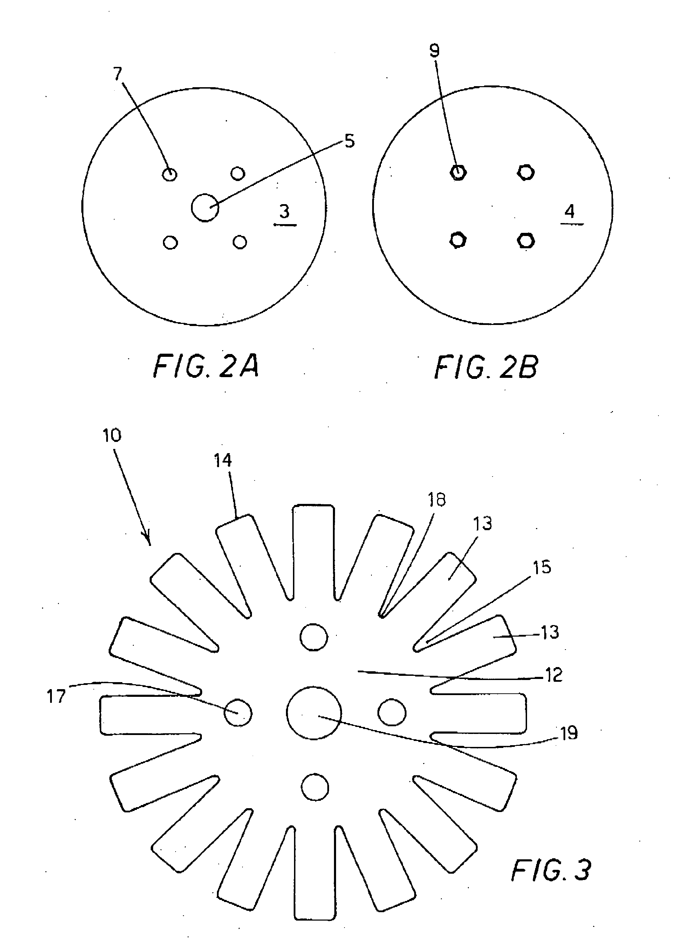

With reference to Figures 1 and 2, a filter 1 according to the invention is disclosed, having a substantially cylindrical shape, comprising a plurality of filtering elements 10 axially stacked and pressed on one another so as to obtain a compact filtering structure.

Filter 1 is delimited, at its two ends, by two metal discs, an upper one 3 and a lower one 4.

Upper disc 3 has a central hole 5 for the passage of the decontaminated dielectric fluid and four equidistant central holes 7 for the insertion of four tie-rods 9 that are fastened to disc 4.

The filtering elements 10 are pressed with the help of tie-rods 9 as well as of a proper machinery, so that no gaps turn out to be present between two adjacent filtering elements 10.

Filter 1 can be contained inside a casing, not shown, having an inlet for the contaminated fluid and an outlet for the purified fluid or can be mounted onto a filters-holder support installed inside a filtration bulb, that will be subsequently illustrated in detail.

Filtration of the water base dielectric fluid takes place in laminar way, generally from bottom upwards.

The water base dielectric fluid is a fluid used in machinery such as wire electroerosion machines, milling cutters, grinding machines, turning machines and so on, and can consist of demineralized water or of a water-oil emulsion.

With reference to Figure 3, a filtering element 10 according to the invention is illustrated in detail, the filtering element being substantially inscribable in a circumference and comprising a circular central region 12, from the periphery of which a plurality of spokes 13 radially depart, said spokes being equidistant therebetween, having the same length and ending on said circumference so as to form interstices 15 having a rounded tip 18.

Spokes 13 have a substantially rectangular shape with ends edges 14 that can be rounded or squared.

The circular central region 12 comprises a central hole 19, alignable with hole 5 of the metal disc 3, through which the dielectric fluid being filtered by the filtering element 10 flows. Between the central hole 19 and the spokes 13 four peripheral holes 17, mutually equidistant, are provided, that are used to insert the respective tie-rods 9 onto which a plurality of filtering elements 10 is stacked.

Thanks to the particular configuration of the filtering element 10, which provides for the interstices 15 also visible in Figure 1, with the same filtering surface of a conventional filter made of solid discoidal filtering elements, a very reduced size is obtained.

In-depth studies made by the applicant, have then allowed to identify a kind of material that advantageously allows a high quality filtration. Such material consists of resin impregnated paper.

The filtration degree achievable with a filter consisting of filtering elements 10 made of such a material is 3 µm.

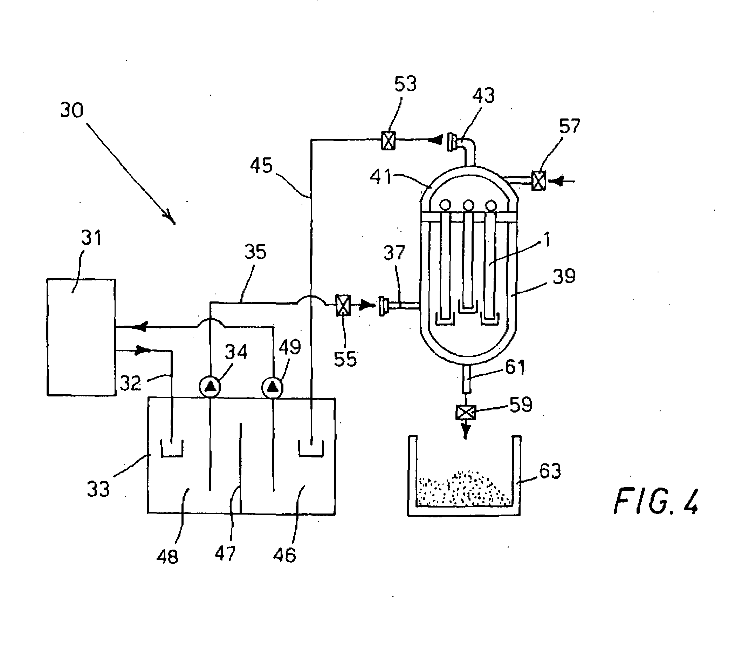

With reference to Figure 4, an example of application of the filter according to the invention is illustrated, in a system 30 used to decontaminate a dielectric fluid, particularly demineralized water, used in a wire electroerosion machine with the respective self-cleaning system of the filtering elements.

From a basin 31 of a wire electroerosion machine, a contaminated dielectric fluid flows through a duct 32 into a decantation basin 33, which comprises a baffle 47 to separate a compartment 48 for the contaminated fluid from a compartment 46 for the purified fluid.

By activating a pump 34, the contaminated fluid flows through a duct 35 towards the inlet 37 of a filtration bulb 39 made of stainless steel.

The filtration bulb 39 comprises at least one filter 1 according to the invention consisting of a filtering elements 10 stack. Preferably, in order to increase the filtration surface, seven filters 1 are used, which are arranged on a filters-holder support having a disc shape, not shown, so that one of said filters 1 is centrally arranged on the filters-holder support and the other six filters 1 are arranged at the periphery of the filters-holder support. Obviously, the number of filters of the filters-holder support can be varied depending on the fluid to be filtered and on the machine operation needs.

Bulb 39 is moreover provided with a cover 41 protecting filters 1 from the external environment and allowing a quick access inside the bulb 39 for a possible replacement or maintenance of filters 1.

During its upwards rise, the water base dielectric fluid laterally penetrating through duct 37 of bulb 39 is purified from the possible presence of impurities that settle on the filtering elements 10 of filters 1.

The purified fluid flows out from an upper outlet 43 of the bulb 39 and flows through a duct 45 to end into the compartment 46 of the decantation basin 33 from which, pumped by a pump 49, is introduced again into the basin 31 of the wire electroerosion machine, ready to be used in a manufacturing cycle of such machine. At regular time intervals, the impurities settled on the filtering elements 10 of filters 1 are discharged by introducing pressurized air from top of the bulb 39 through a duct 57 laterally arranged on the cover 41 of the bulb 39. During its path towards the lower portion of the bulb 39, the pressurized air removes from filtering elements 10 of filters 1 the impurities settled on them during the filtration process.

Such impurities are made to flow out from a duct 61 arranged below bulb 39 and are collected in a collector that is emptied at regular intervals. System 30 is automatically controlled from a control device, not shown, that provides to operate the pump 34 as well as to open and close valves 55,53,57,59 that respectively operate the entry to bulb 39 of the contaminated dielectric fluid, the exit from bulb 39 of the purified dielectric fluid, the air introduction into bulb 39 for the filters 1 cleaning and the discharge of the impurities into the proper collector 63.

It is evident that what has been disclosed is given by way of non limiting example and that variants and modifications are possible without leaving the protective scope of the invention.

For instance, the filtering element 10 has been disclosed as having a shape inscribable in a circumference. However, it can have a shape inscribable in a square, an ellipse, a rectangle or other geometrical surfaces depending on the applications.

For instance, spokes 13 of the filtering element 10, instead of being all of the same length, can moreover have different lengths.

For instance, the hole for the passage of the dielectric fluid can also be provided in a non-central position with respect to region 12.

For instance, the filtering element 10 can also be without holes 17 for the tie-rods 9. In this case, the filtering elements can be stacked and pressed by operating for instance from the outside on the metal discs 3 and 4.

## Claims

1. A filtering element (10) for filtering a water base dielectric fluid comprising a central region (12), in which a central hole (19) for the axial passage of said dielectric fluid is obtained, and a plurality of spokes (13) radially extending from the central region (12) periphery so as to form respective interstices (15) between two adjacent spokes (13), **characterized in that** said filtering element (10) is made of resin impregnated paper.

2. A filtering element (10) according to claim 1, wherein in said central region (12) at least one hole (17), preferably four, is further obtained for the passage of a respective tie-rod (9) used to axially stack and mutually press a plurality of said filtering elements (10).

3. A filtering element (10) according to claim 1 or 2, wherein said spokes (13) have a substantially rectangular shape.

4. A filtering element according to one of the preceding claims, wherein said spokes (13) are mutually equidistant.

5. A filtering element according to one of the preceding claims, wherein all said spokes (13) have the same length.

6. A filtering element according to one of the preceding claims, wherein said central region (12) have a circular shape.

7. A filtering element (10) according to one of the preceding claims, wherein said spokes (13) have an edge (14) with a rounded or squared end and said interstice (15) has, in correspondence with said central region (12) periphery, a rounded tip (18).

8. A filter (1) for filtering a dielectric fluid comprising a plurality of filtering elements according to one of the preceding claims, said elements (10) being axially stacked and mutually pressed.

9. A filter (1) according to claim 8, wherein said filter is delimited, at its ends, by an upper metal disc (3) and by a lower metal disc (4), said upper disc (3) having a hole (5) for the passage of said dielectric fluid and at least one hole (7) for the passage of a tie-rod (9) that is fastened to said lower disc (4).

10. A filter (1) according to claim 9, wherein said filtering elements (10) and said discs (3,4) are contained inside a casing in which an inlet for the contaminated dielectric fluid and an outlet for the purified dielectric fluid are obtained.

11. A filter (1) according to one of the claims 8 to 10, wherein said filter is self-cleaning.

12. A system (30) for purifying a water base dielectric fluid used in the manufacturing cycle of a machine tool, particularly a wire electroerosion machine, comprising a filtration bulb (39) inside which a filters-holder support is provided, onto which at least one filter (1) according to claim 8 is mounted.

13. A system (30) according to claim 12, wherein said at least one filter (1) is self-cleaning.

14. A method for manufacturing a filter (1) for filtering a dielectric fluid comprising the steps of:
- providing a plurality of filtering elements (10) according to one of the preceding claims 1 to 7;
- providing an upper metal disc (3), a lower metal disc (4) and at least a tie-rod (9), said upper disc (3) having a hole (5) for the passage of said dielectric fluid and at least one hole (7) for the passage of said at least one tie-rod (9) that is fastened to said lower disc (4);
- axially stacking and mutually pressing said filtering elements (10) between said upper disc (3) and said lower disc (4) by the help of said at least one tie-rod (9) so that no gaps turn out to be present between two adjacent filtering elements (10).

## Patentansprüche

1. Ein Filterelement (10) zur Filterung einer dielektrischen Flüssigkeit auf Wasserbasis, mit einen zentralen Bereich (12), in dem eine zentrale Öffnung (19) für den axialen Durchgang der dielektrischen Flüssigkeit vorgesehen ist und mit einer Vielzahl von Speichen (13), die sich radial vom Umfang des zentralen Bereiches (12) aus erstrecken, um so jeweils Zwischenräume (15) zwischen zwei benachbarten Speichen (13) zu bilden,
**dadurch gekennzeichnet, dass** das Filterelement (10) aus harzgetränktem Papier hergestellt wird.

2. Filterelement (10) nach Anspruch 1,
wobei im Zentralbereich (12) weiter mindestens eine, vorzugsweise vier Öffnungen (17), als Durchgang für einen entsprechenden Zugstab (9) ausgebildet sind, um eine Vielzahl der Filterelemente (10) axial zu stapeln und gegenseitig aneinanderzudrücken.

3. Filterelement (10) nach Anspruch 1 oder 2, wobei die Speichen (13) eine im Wesentlichen rechteckige Form haben.

4. Filterelement (10)? nach einem der vorhergehenden Ansprüche,
wobei die Speichen (13) gegenseitigen gleichen Abstand voneinander haben.

5. Filterelement (10)? nach einem der vorhergehenden Ansprüche, wobei alle Speichen (13) dieselbe Länge aufweisen.

6. Filterelement (10)? nach einem der vorhergehenden Ansprüche,
wobei der zentrale Bereich (12) Kreisform hat.

7. Filterelement (10) nach einem der vorhergehenden Ansprüche,
wobei die Speichen (13) eine Kante (14) mit abgerundetem oder rechteckigem Ende haben und der Zwischenraum (15), dem Umfang des zentralen Bereichs (12) entsprechend, eine abgerundete Spitze (18) aufweist.

8. Filter (1) zur Filterung einer dielektrischen Flüssigkeit, das eine Vielzahl von Filterelementen nach einem der vorhergehenden Ansprüche aufweist, wobei die Elemente (10) axial gestapelt und gegeneinander gepresst sind.

9. Filter (1) nach Anspruch 8, wobei das Filter an seinen Enden von einer oberen Metallscheibe (3) und einer unteren Metallscheibe (4) begrenzt wird, wobei die obere Scheibe (3) ein Loch (5) zum Durchgang der dielektrischen Flüssigkeit und mindestens ein Loch (7) für den Durchgang einer Zugstange (9) hat, die an der unteren Scheibe (4) befestigt ist.

10. Filter (1) nach Anspruch 9,
wobei die Filterelemente (10) und die Scheiben (3, 4) innerhalb eines Gehäuses untergebracht sind, in dem ein Einlass für die kontaminierte dielektrische Flüssigkeit und ein Auslass für die gereinigte dielektrische Flüssigkeit vorgesehen sind.

11. Filter (1) nach einem der Ansprüche 8 bis 10,
wobei das Filter selbstreinigend ist.

12. System (30) zur Reinigung einer dielektrischen Flüssigkeit auf Wasserbasis, die im Fertigungszyklus einer Werkzeugmaschine, insbesondere einer elektrischen Drahterosionsmaschine eingesetzt wird, das eine Filterpatrone (39) aufweist, in der eine Filterhalterstütze vorgesehen ist, auf der mindestens ein Filter (1) nach Anspruch 8 befestigt ist.

13. System (30) nach Anspruch 12,
wobei mindestens ein Filter (1) selbstreinigend ist.

14. Verfahren zur Herstellung eines Filters (1) zur Filterung einer dielektrischen Flüssigkeit, das folgende Verfahrensschritte aufweist:
- Bereitstellung einer Vielzahl von Filterelementen (10) nach einem der vorhergehenden Ansprüche 1 bis 7;
- Bereitstellung einer oberen Metallscheibe (3), einer unteren Metallscheibe (4) und mindestens einer Zugstange (9), wobei die obere Scheibe (3) eine Öffnung (5) für den Durchgang der dielektrischen Flüssigkeit und mindestens eine Öffnung (7) für den Durchgang der mindestens einen Zugstange (9) aufweist, die an der unteren Scheibe (4) befestigt ist;
- axiales Stapeln und gegenseitiges Anpressen der Filterelemente (10) zwischen der oberen Scheibe (3) und der unteren Scheibe (4) mittels der mindestens einen Zugstange (9), so dass keine Lücken zwischen zwei nebeneinander liegenden Filterelementen (10) auftreten können.

## Revendications

1. Elément filtrant (10) permettant de filtrer un fluide diélectrique à base d'eau comprenant une zone centrale (12), dans laquelle est formé un trou central (19) pour le passage axial dudit fluide diélectrique, et une pluralité de bras (13) s'étendant radialement à partir de la périphérie de la zone centrale (12) de façon à former des interstices respectifs (15) entre deux bras adjacents (13), **caractérisé en ce que** ledit élément filtrant (10) est constitué de papier imprégné de résine.

2. Elément filtrant (10) selon la revendication 1, dans lequel, dans ladite zone centrale (12), au moins un trou (17), de préférence quatre, est (sont) réalisé(s), de plus, pour le passage d'une tige de raccordement (9) utilisée pour empiler axialement et presser mutuellement une pluralité desdits éléments filtrants (10).

3. Elément filtrant (10) selon la revendication 1 ou 2, dans lequel lesdits bras (13) présentent une configuration essentiellement rectangulaire.

4. Elément filtrant (10) selon l'une des revendications précédentes, dans lequel lesdits bras (13) sont mutuellement équidistants.

5. Elément filtrant selon l'une des revendications précédentes, dans lequel tous lesdits bras (13) ont la même longueur.

6. Elément filtrant selon l'une des revendications précédentes, dans lequel ladite zone centrale (12) présente une configuration circulaire.

7. Elément filtrant (10) selon l'une des revendications précédentes, dans lequel lesdits bras (13) comportent un bord (14) doté d'une extrémité arrondie ou carrée et dans lequel ledit interstice (15) comporte, de façon correspondante à ladite périphérie de la zone centrale (12) une pointe arrondie (18).

8. Filtre (1) servant à filtrer un fluide diélectrique comportant une pluralité d'éléments filtrants selon l'une des revendications précédentes, lesdits éléments (10) étant empilés axialement et mutuellement comprimés.

9. Filtre (1) selon la revendication 8, dans lequel ledit filtre est délimité, au niveau de ses extrémités, par un disque métallique supérieur (3) et par un disque métallique inférieur (4), ledit disque supérieur (3) comportant un trou (5) destiné au passage dudit fluide diélectrique et au moins un trou (7) destiné au passage d'une tige de raccordement (9) qui est fixée au dit disque inférieur (4).

10. Filtre (1) selon la revendication 9, dans lequel lesdits éléments filtrants (10) et lesdits disques (3, 4) sont contenus à l'intérieur d'un boîtier dans lequel un orifice d'entrée destiné au fluide diélectrique contaminé et un orifice de sortie destiné au fluide diélectrique purifié sont formés.

11. Filtre (1) selon l'une des revendications 8 à 10, dans lequel ledit filtre est autonettoyant.

12. Système (30) pour purifier un fluide diélectrique à base d'eau utilisé dans le cycle de fabrication d'une machine outil, particulièrement d'une machine d'électroérosion à fil métallique, comportant une ampoule de filtration (39) à l'intérieur de laquelle un support de porte-filtres est prévu, sur lequel au moins un filtre (1) selon la revendication 8 est monté.

13. Système (30) selon la revendication 12, dans lequel ledit au moins un filtre (1) est autonettoyant.

14. Procédé pour fabriquer un filtre (1) permettant de filtrer un fluide diélectrique comprenant les étapes consistant à :
- fournir une pluralité d'éléments filtrants (10) selon l'une des revendications précédentes 1 à 7 ;
- fournir un disque métallique supérieur (3), un disque métallique inférieur (4) et au moins une tige de raccordement (9), ledit disque supérieur (3) comportant un trou (5) destiné au passage dudit fluide diélectrique et au moins un trou (7) destiné au passage de ladite, au moins une, tige de raccordement (9) qui est fixée audit disque inférieur (4) ;
- empiler axialement et comprimer mutuellement lesdits éléments filtrants (10) entre ledit disque supérieur (3) et ledit disque inférieur (4) à l'aide de ladite, au moins une, tige de raccordement (9) de façon qu'aucune formation d'intervalle ne se produise entre deux éléments filtrants adjacents (10).
